# EUROPEAN PATENT APPLICATION

(11) **EP 1 215 259 A1**
(43) Date of publication of application: **19.06.2002**
(21) Application number: 99956374.5
(22) Date of filing: 13.08.1999
(51) Int. Cl.: C09K 5/06

(54) **THERMAL STORAGE COMPOSITION**

(71) Applicant: THE PROCTER & GAMBLE COMPANY, Cincinnati, Ohio 45202 (US)
(72) Inventor: DYATLOV, Valery Alexandrovich, Moscow, 119034 (RU); HARTMUT, Hoehne, D-65842 Schwalbach am Taunus (DE); VINOGRADOV, Valentin Antonovich, Moscow, 123007 (RU); KRENEV, Vladimir Alexandrovich, Moscow, 109377 (RU); DROBOT, Nataliya Fedorovna, Moscow, 125319 (RU); GAVRICHEV, Konstantin Sergeevich, Moscow, 117334 (RU); BABIEVSKAYA, Irina Zinovievna, Moscow, 117454 (RU); NOSKOVA, Olga Anatolievna, Moskovskaya obl., 144007 (RU); BAZHENOVA, Elena Vladimirovna, Moscow, 127238 (RU); VASILIEV, Viktor Sergeevich, Moscow, 125422 (RU)
(74) Representative: Cabinet Hirsch
(86) International application number: RU9900294
(87) International publication number: WO0112748

(57) **Abstract**

The invention relates to a thermal storage composition containing a phase transition material having a range of temperatures corresponding to the liquid - solid phase transition ranging between 34 and 56 °C and a crystallization modifier represented in the following proportions, in weight percent: phase transition material 95 - 99.9; and crystallization modifier 0.1 - 5.0. As a phase transition material, various compositions can be used having a temperatures range corresponding to the liquid - solid phase transition ranging between 34 and 56 °C, for example, mixtures of sodium acetate trihydrate and of sodium thiosulfate pentahydrate, of sodium acetate trihydrate and urea; a mixture of magnesium nitrate hexahydrate and magnesium chloride hexahydrate and of ammonium nitrate; a mixture of acetamide and potassium acetate, of ammonium nitrate and of urea; a mixture of urea and sodium bromide, of sodium isothiocyanate, of sodium iodide and of sodium nitrate. As crystallization modifier, materials such as paraffin, gum arabic and gelatin can be used as well as other organic materials having a plasticizing or gelling action.

## Description

### Field of the Invention

The invention relates to supercooled heat accumulating materials with latent phase change heat, which can be used, for example, to warm parts of a human body, to warm up food or products and for other medical and household needs.

### Background Art

In recent years a great deal of attention has been devoted to developing and using heat accumulating phase change materials and articles made on the base thereof. Phase change materials, capable of storing and generating heat, have found wide use in building materials. materials for road surfaces, containers for beverages and food products, in medical heating pads and in textile articles, for example, in clothes.

Known, for example, are phase change materials on the base of salts of nitrous and nitric acids, for example, of the following composition, % by weight:

| | |
|---|---|
| sodium nitrite | 40, |
| sodium nitrate | 7, |
| potassium nitrate | 53. |

This composition melts at 142°C with a specific heat of the phase transition equal to 81.4 kJ/kg [Une V.W., Voznick H.P. Molten Salt as a Heat Transfer Medium - Chemical Engin. Progress. 1963, vol. 59, N 5, p. 35].

In order to reduce the level of the working temperature and to increase the energy capacity, this composition was modified by the addition of sodium acetate and had the following composition, % by weight:

| | |
|---|---|
| sodium nitrite | 39.7-41.4, |
| sodium nitrate | 50.5-52.7, |
| sodium acetate | 5.9-9.8. |

This composition melts at 124-130°C with a specific heat of the phase transition equal to 126-132 kJ/kg [USSR Inventor's Certificate 1733461 A1, 1990, IPC⁵ C 09 K /06].

Sodium acetate in the form of a trihydrate is one of the earliest and most well-studied heat-accumulating materials. Its supersaturated solutions may be cooled to a temperature below 0°C, retaining therewith a reserve of latent energy. This energy may be preserved for a long time without degradation or spontaneous release, and upon initiation it may be generated at any moment. Sodium acetate trihydrate is very convenient in those cases when it is necessary to rapidly raise the temperature to 50°C.

A supercooled heat-accumulating material on the base of sodium acetate trihydrate was proposed with gelatin as the plasticizer, in the following composition:

| | |
|---|---|
| sodium acetate trihydrate | 97.50-99.95, |
| gelatin | 0.05-2.50. |

The energy capacity of this material is 250-260 kJ/kg, the number of thermal cycles without reduction of the energy capacity - not less than 1000, while the temperature of the heating pad 20 sec after initiation is 57-58°C [USSR patent 1833404 A3, priority date February 6, 1990, IPC⁵ C 09 K /06].

However, when the known compositions are used for medical purposes, for example, as a source of heat in medical heating pads, a problem exists which is related to the heating temperature of the heat-accumulating material, which may result in burns, and consequently, cannot be used without appropriate protection means, etc.

Such a heat-accumulating material is desirable for medical heating pads, which would have a phase change temperature close to the body temperature of a human (ideally about 36-42°C), which after initiation would generate heat for a long period (ideally 4 hours and more), which would maintain stability in a supercooled state at temperatures from room temperature to -20°C, and which would retain its properties during multiple use.

A heat-accumulating material, which also has a phase transition at a temperature close to the temperature of a human body, self-crystallizing, capable of retaining a predetermined temperature for a lengthy period due to the heat of crystallization and not losing its properties during repeated use, is suitable for medical purposes related to the necessity of maintaining stable heating temperature over a lengthy period.

Also known are compositions which comprise gum arabic, paraffin etc., but their capability of prolonging the period of heat generation has never been discussed. To the contrary, the presumption was made that they promote initiation of crystallization (PCT/AU93/00427 and Ulman and Valentin. Solar Energy Materials, vol. 9, 177-181, 1983), i.e. that they have an opposite effect.

The object of the present invention is to develop a material which conforms with the requirements indicated above.

### Description of the Invention

The authors of the present invention showed that use of a crystallization modifier makes it possible to prolong the time heat is generated by the heat-accumulating composition and modifies the stability of the supercooled state.

The Applicants also showed that the proposed compositions also have such a positive property as the possibility for their multiple use.

Thus, the present invention relates to a heat-accumulating composition comprising a phase change material and a crystallization modifier, taken in a predetermined ratio, which has a liquid-solid phase transition temperature, close to the temperature of a human body.

More concretely, the invention relates to a heat-accumulating composition comprising a phase change material with a range of the liquid-solid phase transition temperature, and a crystallization modifier, taken in the following ratio, % by weight:

| | |
|---|---|
| phase-change material | 95-99.9, |
| crystallization modifier | 0.1-5.0. |

Different compositions, which have a range of the liquid-solid phase transition temperature equal to 34-56°C, may be used as the phase-change material. Such compositions may be, for example, a mixture of sodium acetate trihydrate and sodium thiosulfate pentahydrate, sodium acetate trihydrate and urea; a mixture of magnesium nitrate hexahydrate, magnesium chloride hexahydrate and ammonium nitrate; mixtures of acetamide and potassium acetate, ammonium nitrate or urea; mixtures of urea and sodium bromide, potassium isothiocyanate, sodium iodide or sodium nitrate.

Paraffin, gum arabic, gelatin or other organic substances, for example, which have plasticizing or jellying properties, may be used as a crystalline modifier.

In particular, it is proposed that a mixture of sodium thiosulfate pentahydrate and sodium acetate trihydrate, taken in the following ratio, % by weight:

| | |
|---|---|
| CH₃COONa.3H₂O | 28-50, |
| Na₂S₂O₃.5H₂O | 50-72, |

be used as the phase change material.

An example may be a composition comprising 28% of a first component and 72% of a second, which meets eutectics, formed by sodium acetate trihydrate and sodium thiosulfate pentahydrate. The mixture melts within the range of from 38 to 56°C. In accordance with differential scanning calorimetry (DSC), the enthalpy of melting was 201.29 J/g at a temperature of 40.3°C maximum, crystallization was not observed when cooled to -20°C. The temperature range of 37-41°C is reached when crystallization of a melt weighing 20-70 g is initiated. The duration of heat generation at body temperature is, depending on weight, from 50 minutes to 3 hours. At room temperature, the duration of heat generation is reduced two times.

The optimum additive is paraffin. The amount of the additive is 0.2-0.5% of the weight of the mixture. In the presence of a 0.5% paraffin additive, the heating temperature of the mixture does not differ from that of a pure mixture, while the duration of heat generation is increased two times. When the weight of the mixture is 50 g, heat generation at human body temperature is retained for 5 hours. Multiple repetition of the melting-hardening cycles under rarefaction conditions < 10 mm Hg has no influence on the heating characteristics of this mixture. After 20 cycles the heating temperature of a 50 g mass is 40.5°C with a 5-hour duration of heat generation, among which the temperature exceeds 39°C during 3.5 hours.

Melting a mixture comprising 50% CH₃COONa.3H₂O and 50% Na₂S₂O₃.5H₂O takes place within the temperature range of 37-36°C, the melting enthalpy is, according to DSC data, 218.7 J/g at a temperature 41°C maximum. The maximum temperature of the mixture during crystallization of a melt weighing 10-100 g is 40.5-47°C. The duration of heat generation depends on the ambient temperature. At human body temperature, heat generation continues for from 1 to 3 hours for the aforesaid weight. Multiple repetition of the melting-hardening cycles under rarefaction conditions ≤ 10 mm Hg does not affect the heating characteristics of this mixture. Being melted, the mixture is retained in a liquid form for a lengthy period.

Another example of a phase change material comprising sodium acetate trihydrate is a mixture of sodium acetate trihydrate and urea, taken in the following ratio, % by weight:

| | |
|---|---|
| CH₃COONa.3H₂O | 75-90, |
| NH₂CONH₂ | 10-25. |

Compositions, consisting of sodium acetate trihydrate and urea are interesting in that the temperature to which they heat, when crystallization of one and the same weight is initiated, is reduced in proportion to the increase in the content of urea therein. By changing the content of urea in the mixture from 10 to 35% and the weight from 20 to 100g, it is possible to obtain any heating temperature of the mixture within the range of from 32 to 50°C.

According to DSC data, two heating effects are noted for a composition comprising 15% urea: with a maximum at 34.3°C and enthalpy 71.48 J/g, with a maximum at 49.1°C and enthalpy 91.18 J/g, crystallization is not observed when cooled to -20°C. The melting range of this composition is substantially increased: 30.5-60.5°C. When the urea content increases, the melting range becomes somewhat narrower, while the heating effect is reduced. The duration of heat generation of these mixtures hardly changes at all when the composition changes and is determined by the weight: at a weight of 20-70 g the duration of action of the composition is 1-3 hours.

A mixture containing 20% urea, weight 50 g, is heated to 42°C. The optimum additive is gum arabic, which may be introduced in the form of a powder and in the form of a solution in water. The amount of gum arabic is 0.1-0.21% of the weight of the mixture. In the presence of this additive, the maximum heating temperature of the mixture with a weight of 50 g and multiple heat cycling is 44-45°C. The duration of heat generation at human body temperature is 3.5-4 hours, among which the temperature is above 38°C for approximately 2 hours.

One more example of a phase change material is a mixture of magnesium nitrate hexahydrate, magnesium chloride hexahydrate and ammonium nitrate, taken in the following ratio, % by weight:

| | |
|---|---|
| Mg(NO₃)₂.6H₂O | 30.6, |
| MgCl₂.6H₂O | 31.9, |
| NH₄NO₃ | 37.5. |

This composition is triple eutectic. melting in a range of from 42 to 53.5°C. According to DSC data, the melting enthalpy is 118.89 J/g with a maximum at 44.5°C. when cooled to -20°C the effects were not observed. In the case of rapid cooling, spontaneous crystallization is observed at 42.5°C...A mixture weighing 20-60 g heats to 42-45°C. The duration of heat generation is from 1.5 to 3.5 hours.

Paraffin, gum arabic or gelatin, in particular, may be used as the crystalline modifier.

This mixture may be used to stabilize the heating temperature at a level which is safe for a human body.

It is also proposed that mixtures on the base of acetamide be used as the heat-accumulating phase change material, in particular:
a mixture of acetamide and potassium acetate, taken in the following ratio, % by weight;

| | |
|---|---|
| CH₃CONH₂ | 67, |
| CH₃COOK | 33; |

a mixture of acetamide and urea, taken in the following ratio, % by weight;

| | |
|---|---|
| CH₃CONH₂ | 65, |
| NH₂CONH₂ | 35; |

a mixture of acetamide and ammonium nitrate, taken in the following ratio, % by weight;

| | |
|---|---|
| CH₃CONH₂ | 65, |
| NH₄NO₃ | 35. |

The last mixture is an eutectic composition which has a phase transition at a melting temperature of 36-41°C. According to DSC data, enthalpy of the transition is 141.28 J/g with a maximum at 38°C, upon cooling an effect is detected at -13.3°C with an enthalpy of 77.18 J/g.

In the case of rapid cooling in air, spontaneous crystallization takes place at 29-35°C. The speed of crystallization at temperatures close to 36°C is very low, which ensures lengthy, soft heat generation. The heating temperature of a mixture weighing 20-50 g is 39-43°C. The duration of heat generation with a weight of 20-50 g at a temperature of 36°C is from 3 to 6 hours.

An additive may be paraffin. In the presence of 0.5% paraffin at a temperature of 36.6°C, the heat generation is more energetic but less prolonged.

Thus, the instant composition may be utilized for stabilization of the heating temperature in a medical device at a level which is not dangerous for a human being. This device should not be initiated at room temperature, but directly before utilization may be heated over a water bath until the mixture is completely dissolved. After cooling and the beginning of crystallization, the device is applied to the necessary part of the body. Because of the large heat capacity, the heating bag cools very slowly, and after cooling to a temperature below body temperature, spontaneous crystallization with heat generation begins again.

It is proposed that compositions consisting of mixtures of urea and inorganic salts also be used as phase change materials spontaneously crystallizing in the process of cooling.

Urea may be included in the composition of phase change material in the form of a mixture of urea and sodium bromide, taken in the following ratio, % by weight:

| | |
|---|---|
| NH₂CONH₂ | 69.3, |
| NaBr | 30.7; |

a mixture of urea and potassium isothiocyanate, taken in the following ratio, % by weight:

| | |
|---|---|
| NH₂CONH₂ | 53.2, |
| KCNS | 46.8; |

a mixture of urea and sodium iodide, taken in the following ratio, % by weight:

| | |
|---|---|
| NH₂CONH₂ | 62.3, |
| NaJ | 37.7; |

a mixture of urea and sodium nitrate, taken in the following ratio, % by weight:

| | |
|---|---|
| NH₂CONH₂ | 46.5, |
| NH₄NO₃ | 53.5. |

These mixtures are eutectics, formed in according systems on the base of urea. The melting range of the mixtures is 34-47°C. The mixtures of urea and sodium bromide, sodium nitrate and potassium thioisocyanate crystallize spontaneously when cooled in air at temperatures of 30-38°C. The mixture of urea and sodium iodide crystallizes in different manners depending on the cooling conditions: from spontaneous crystallization to supercooling to -20°C.

These mixtures are recommended for utilization as heat accumulating materials in order to stabilize the temperature at a level close to the temperature of a human body.

The Applicants have shown that multiple repetition of the melting to hardening cycles for the proposed heat accumulating compositions does not affect their heat characteristics. This is a positive property and makes it possible to use them a multiple number of times.

The examples presented below illustrate the proposed invention, but do not in any manner restrict it.

### Example 1. Composition: 28% CH₃COONa.3H₂O + 72% Na₂S₂O₃.5H₂O.

A mixture of 50 g total weight, consisting of 28% by weight of CH₃COONa.3H₂O and 72% of Na₂S₂O₃.5H₂O is carefully ground and mixed. A paraffin additive is introduced in an amount of 0.5% or gum arabic in an amount of 1-3% of the weight of the mixture in the form of finely ground powder and carefully mixed. The obtained mixture is placed in a glass vessel provided with a mechanical initiator, with a cock for vacuumizing the vessel and with a thermocouple. Air is pumped out of the vessel, then it is heated over a water bath at a temperature of 80-90°C until the smallest crystals of the mixture are completely melted (not less than 30 minutes). The melted mixture is cooled and initiated. By means of the thermocouple and a recorder, the heat generation curve of the mixture in time is registered. During the initiated crystallization of a mixture weighing 20-70 g, the heating temperature reaches 37-41°C. The duration of heat generation at body temperature reaches 5 hours.

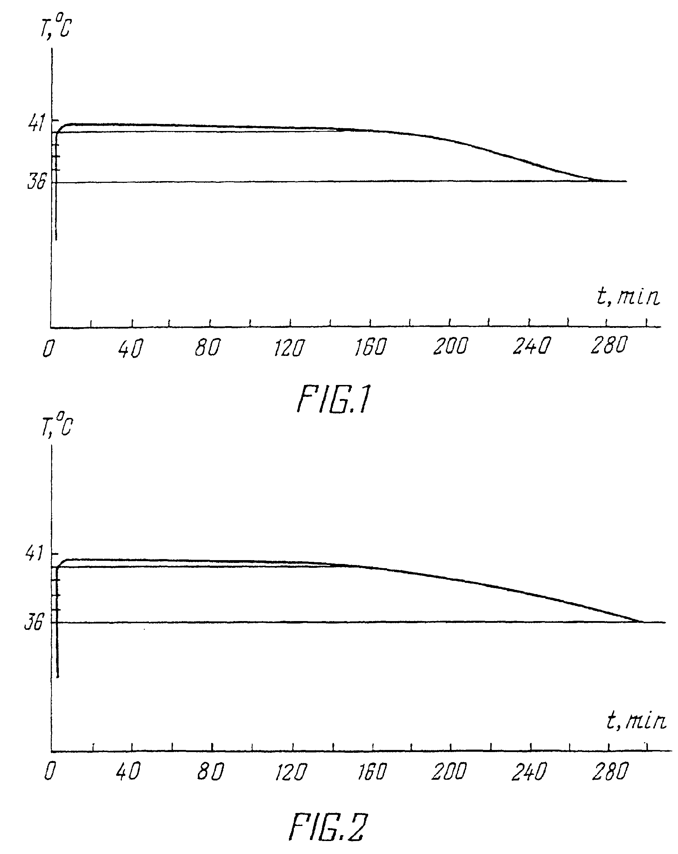

In Table 1, presented below, data is presented on the temperature and heating duration of a mixture weighing 50 g, retaining the gum arabic and paraffin additives. Figures 1 and 2 show the heat generation curves with mixtures having additives of 0.5% paraffin or 3% gum arabic after multiple repetition of the melting-crystallization cycles.

**Table 1**

| 28% CH₃COONa.3H₂O + 72% Na₂S₂O₃.5H₂O, temperature in a constant-temperature chamber 36.6°C, weight of the mixture - 50 g | | | |
|---|---|---|---|
| Additive | Heat cycling, times | Tₘₐₓ, °C | Time, hours |
| 1% gum arabic | 1 | 40.3 | 4 hours 40 min |
| 3% gum arabic | 5 | 40.7 | 5 hours 10 min |
| 3% gum arabic | 10 | 40.8 | 4 hours 30 min |
| 3% gum arabic | 15 | 40.7 | 4 hours 30 min |
| 0.5% paraffin | 1 | 40 | 5 hours |
| 0.5% paraffin | 5 | 41 | 4 hours 40 min |
| 0.5% paraffin | 10 | 41 | 4 hours 30 min |
| 0.5% paraffin | 15 | 40.5 | 5 hours 24 min |
| 0.5% paraffin | 20 | 40.4 | 5 hours |

### Example 2. Composition: 80% CH₃COONa.3H₂O + 20% CO(NH₂)₂.

The method for preparing the mixture and determining its heat generating characteristics is similar to that indicated in Example 1.

An addition of 2% gum arabic is introduced in the form of a 15% solution into the melt of a finished mixture after cooling. Before utilization the finished mixture is initiated.

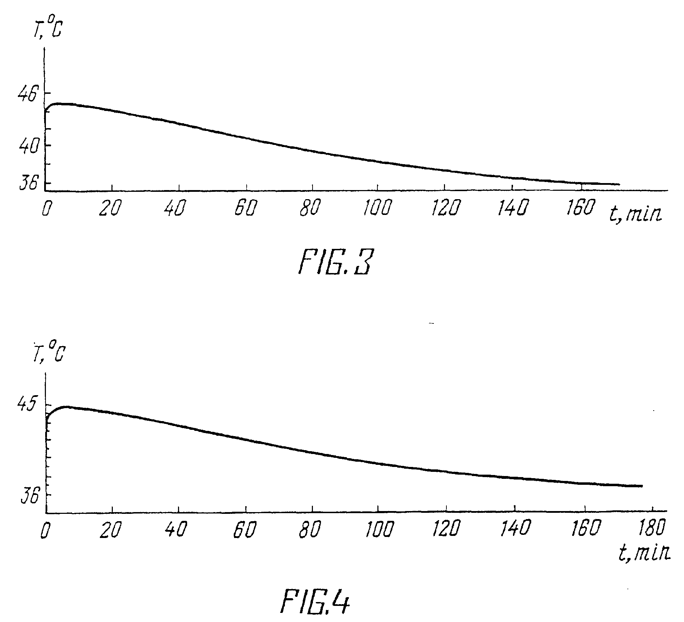

In Table 2, presented below, data is provided on the temperature and duration in which a mixture weighing 50 g heats in the presence of different additives. Heat generation curves of the mixture in the presence of paraffin and gum arabic additives are presented in Figs. 3-4.

**Table 2**

| 80% CH₃COONa.3H₂O + 20% CO(NH₂)₂, temperature in a constant-temperature chamber 36.6°C | | | |
|---|---|---|---|
| Additive | Heat cycling, times | T ₘₐₓ, °C | Time, hours |
| | - | 42 | 2 hours |
| 0.5% paraffin | 1 | 42 | 1 hour 50 min |
| 0.5% paraffin | 6 | 44 | 2 hours 40 min |
| 0.5% paraffin | 10 | 45 | 2 hours 50 min |
| 0.2% gum arabic | 1 | 44.5 | 3 hours 40 min |
| 0.2% gum arabic | 6 | 44.5 | 3 hours 20 min |
| 0.2% gum arabic | 11 | 43 | 3 hours |
| 2% gum arabic | 1 | 42.5 | 3 hours |
| 2% gum arabic | 5 | 45 | 3 hours 50 min |
| 2% gum arabic | 10 | 45.5 | 3 hours 55 min |
| 2% gum arabic | 20 | 45 | 3 hours 20 min |

### Example 3. Composition 30.6% Mg(NO₃)₂.6H₂O + 31.9% MgCl₂.6H₂O + 37.5% NH₄NO₃

The mixture is prepared in a manner similar to that indicated in Example 1. After melting, the finished mixture is cooled in air. In the process of cooling, crystallization begins spontaneously at a temperature of 40-42°C. The heating temperature of a mixture of 60 g weight is 45°C (Table 3), the duration of heat generation - 3.5 hours. In the presence of gelatin and gum arabica additives, the heating temperature drops somewhat, while the duration increases.

**Table 3**

| 30.6% Mg(NO₃)₂.6H₂O + 31.9% MgCl₂.6H₂O + 37.5% NH₄NO₃, temperature in a constant-heat chamber 36.6°C | | | |
|---|---|---|---|
| Additive | Weight, g | Tₘₐₓ, °C | Time |
| - | 20 | 43 | 1 hour 20 min |
| - | 40 | 43.5 | 2 hours 50 min |
| - | 60 | 45 | 3 hours 30 min |
| 5% gelatin | 20 | 38.5 | 1 hour 30 min |
| 5% gum arabica | 20 | 39.5 | 1 hour 30 min |

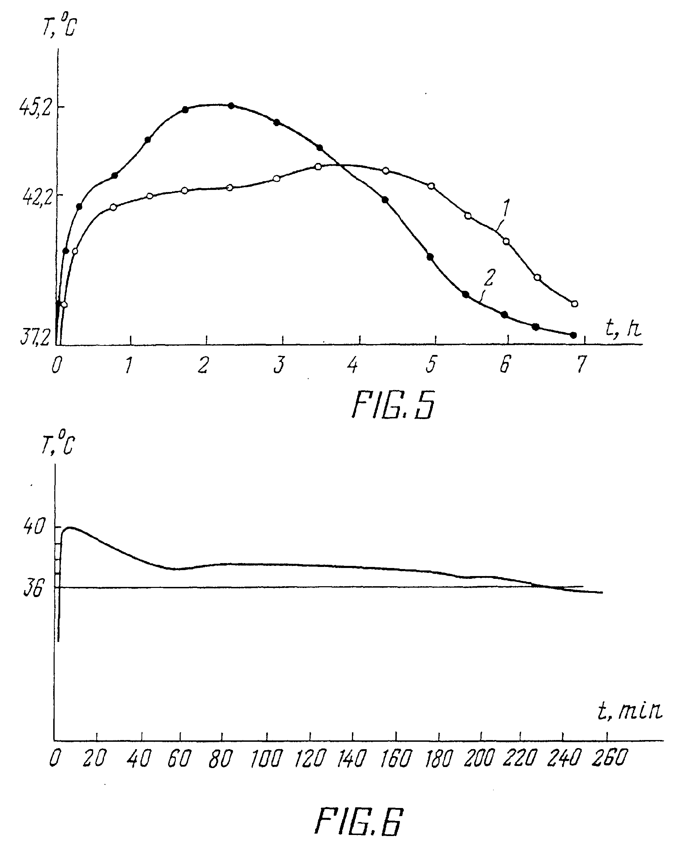

This mixture was used as a heat-stabilizing sublayer for a heat-generating Fe-comprising composition (Fig. 5). With a ratio of the weight of the sublayer to that of the heating composition equal to 1:1, the temperature at the beginning of melting--42°C--remained practically constant and did not increase during further heating. During cooling the heat generation is prolonged due to the heat of crystallization. This mixture makes it possible to maintain the heating temperature--37-43°C--for 7 hours. The heat generating curve has a plateau.

### Example 4. Composition: 65% CH₃CONH₂ + 35% NH₄NO₃

The method of preparing the mixture is similar to that of example 1. After melting, the finished mixture is cooled in air prior to the beginning of spontaneous crystallization. The heat generation curve of a mixture with a weight of 35 g and an additive of 0.5% wax is presented in Fig. 6. The maximum heating temperature is 40°C, the duration of heat generation is 4 hours, among which the temperature is stably maintained at the 37°C level for more than two hours.

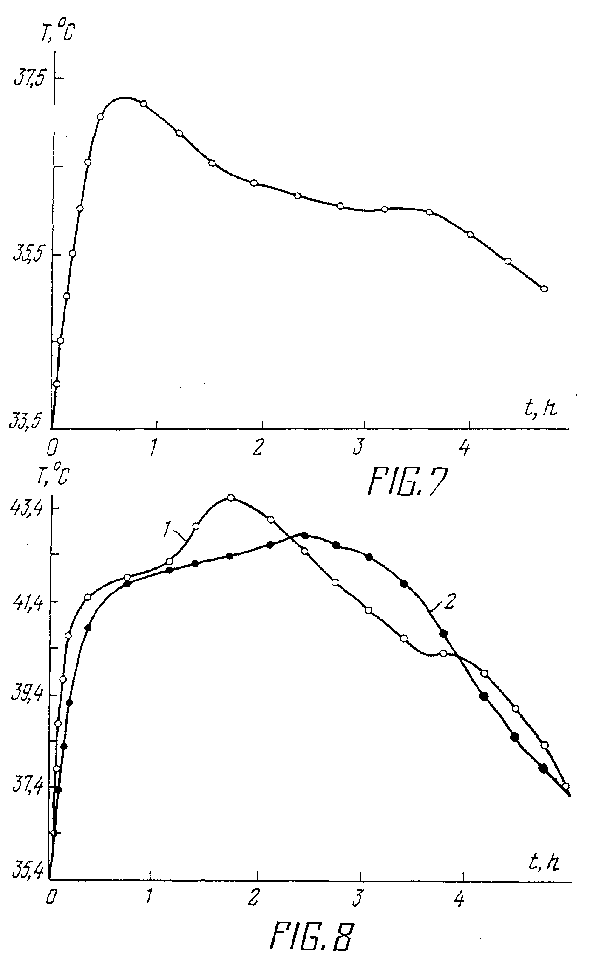

Similar results were also obtained when this mixture was used as a heat-stabilizing sublayer for a heat generating Fe-comprising composition (Fig. 7). With the ratio of the weight of the sublayer to that of the heating composition equal to 1:2, the heating temperature does not exceed 37°C, while the duration of the heating at the > 36°C level is 4 hours.

### Example 5. Composition: 69.3% NH₂CONH₂ + 30.7% NaBr and 53.2% NH₂CONH₂ + 46.8% KCNS.

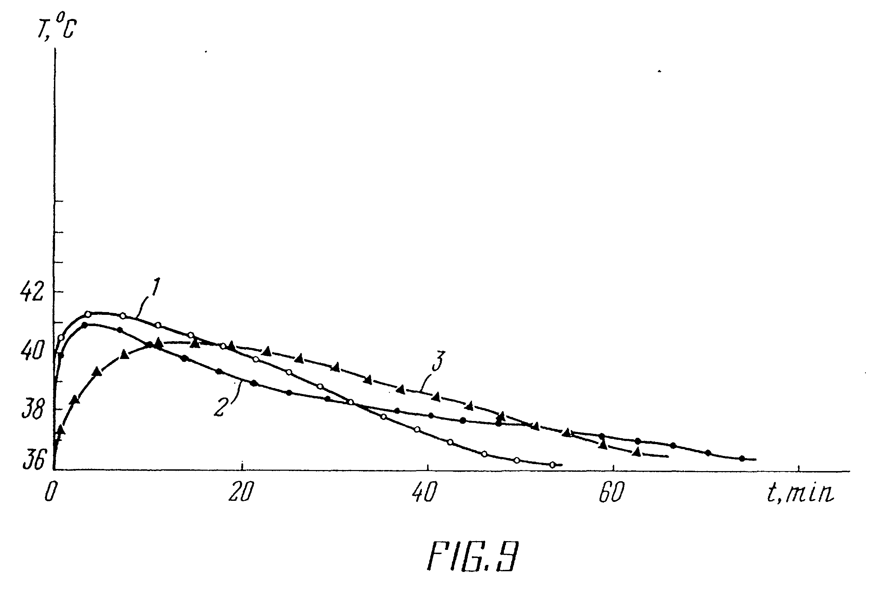

The mixture is prepared in a manner similar to example 1. The obtained mixture was used as a heat-stabilizing sublayer for a heat-generating Fe-comprising composition. Fig. 8 shows the influence of a sublayer of the mixtures indicated above on the heating of a heat-generating Fe-comprising composition. When used as a sublayer, these mixtures make it possible to reduce the heating temperature to 42-44°C. An increase in the duration of heat generation is achieved by generating heat during spontaneous crystallization in the cooling process. A mixture with the inclusion of potassium thiocyanate makes it possible to obtain more uniform heating, this being shown by the plateau on the heat generating curve, but the weight of the salt mixture in that case should be somewhat greater than the weight of the heating mixture. Thus, the eutectics of urea with potassium thiocyanate and sodium bromide may be used for heat stabilization of the temperature within the range of 40-44°C for 4 hours.

### Example 6.

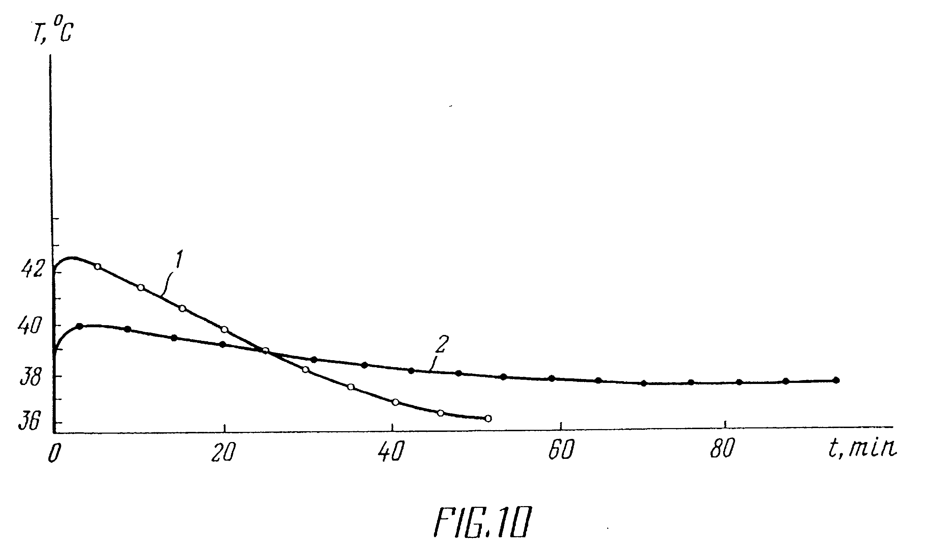

This example illustrates the effect of additives of gum arabica and gelatin on the duration of heat generation during crystallization of heat accumulating mixtures with a phase transition. Fig. 9 shows heat generating curves of a composition consisting of 28% CH₃COONa.3H₂O and 72% Na₂S₂O₃.5H₂O without additives and in the presence of additives - 5% gum arabica and 5% gelatin. Curve 1 corresponds to the heat generation of a mixture without additives. The introduction of additives (curves 2, 3) increases the duration of heat generation of a 20 g mixture by 1.5 times. In Fig. 10, a heat generation curve corresponding to a mixture of 85% CH₃COONa.3H₂O + 15% CO(NH₂)₂ without additives (1) is compared with a curve for that same mixture in the presence of 5% gelatin (2). An increase of the duration of heat generation in this case is even more noticeable.

## Claims

1. A heat-accumulating composition comprising a phase change material, with a range of the liquid-solid phase transition temperature equal to 34-56°C, and a crystallization modifier, taken in the following ratio, % by weight:
| | |
|---|---|
| phase change material | 95-99.9, |
| crystalline modifier | 0.1-5.0. |

2. A composition according to claim 1, **characterized in that** the phase change material is a mixture of sodium acetate trihydrate and sodium thiosulfate pentahydrate, taken in the following ratio, % by weight:
| | |
|---|---|
| CH₃COONa.3H₂O | 28-50, |
| Na₂S₂O₃.5H₂O | 50-72. |

3. A composition according to claim 1, **characterized in that** the phase change material is a mixture of sodium acetate trihydrate and urea, taken in the following ratio, % by weight:
| | |
|---|---|
| CH₃COONa.3H₂O | 75-90, |
| CO(NH₂)₂ | 10-25. |

4. A composition according to claim 1, **characterized in that** the phase change material is a mixture of magnesium nitrate hexahydrate, magnesium chloride hexahydrate and ammonium nitrate, taken in the following ratio, % by weight:
| | |
|---|---|
| Mg(NO₃)₂.6H₂O | 30.6, |
| MgCl₂.6H₂O | 31.9, |
| NH₄NO₃ | 37.5. |

5. A composition according to claim 1, **characterized in that** the phase change material is a mixture of acetamide and potassium acetate, taken in the following ratio, % by weight;
| | |
|---|---|
| CH₃CONH₂ | 67, |
| CH₃COOK | 33. |

6. A composition according to claim 1, **characterized in that** the phase change material is a mixture of acetamide and ammonium nitrate, taken in the following ratio, % by weight;
| | |
|---|---|
| CH₃CONH₂ | 65, |
| NH₄NO₃ | 35. |

7. A composition according to claim 1, **characterized in that** the phase change material is a mixture of acetamide and urea, taken in the following ratio, % by weight;
| | |
|---|---|
| CH₃CONH₂ | 65, |
| NH₂CONH₂ | 35. |

8. A composition according to claim 1, **characterized in that** the phase change material is a mixture of urea and sodium bromide, taken in the following ratio, % by weight:
| | |
|---|---|
| NH₂CONH₂ | 69.3, |
| NaBr | 30.7. |

9. A composition according to claim 1, **characterized in that** the phase change material is a mixture of urea and potassium isothiocyanate, taken in the following ratio, % by weight:
| | |
|---|---|
| NH₂CONH₂ | 53.2, |
| KCNS | 46.8. |

10. A composition according to claim 1, **characterized in that** the phase change material is a mixture of urea and sodium iodide, taken in the following ratio, % by weight:
| | |
|---|---|
| NH₂CONH₂ | 62.3, |
| NaJ | 37.7. |

11. A composition according to claim 1, **characterized in that** the phase change material is a mixture of urea and sodium nitrate, taken in the following ratio, % by weight:
| | |
|---|---|
| NH₂CONH₂ | 46.5, |
| NH₄NO₃ | 53.5. |

12. A composition according to claim 1, **characterized in that** paraffin, gum arabic, gelatin, wax and other organic products that have jellying or plasticizing properties are used as the crystallization modifier.
